# EUROPEAN PATENT SPECIFICATION

(11) **EP 4 113 011 B1**
(45) Date of publication and mention of the grant of the patent: **20.08.2025**
(21) Application number: 21182201.0
(22) Date of filing: 28.06.2021
(51) Int. Cl.: F24C 15/32, B64D 11/04, F24C 15/30, F16K 31/06, F16K 37/00

(54) **AIRCRAFT GALLEY STEAM OVEN**
FLUGZEUGKÜCHEN-DAMPFOFEN
FOUR À VAPEUR POUR CUISINE D'AVION

(43) Date of publication of application: 04.01.2023
(73) Proprietor: B/E Aerospace, Inc., Winston Salem, NC 27105 (US)
(72) Inventor: EPSKAMP, Job, 3439 MG Nieuwegein (NL)
(74) Representative: Dehns

(56) References cited:
- WO-A1-2004/104483
- WO-A1-2011/056763
- WO-A1-2012/126124
- DE-A1- 102008 012 681
- IT-A1- TA20 120 005

## Description

### Technical Field

This disclosure relates to a steam oven for an aircraft galley, and to a method of operating a steam oven in an aircraft galley.

### Background

Aircraft can be equipped with steam ovens for cooking or heating food for passengers of the aircraft. The steam ovens are typically provided as part of a galley insert which enables easy installation and removal of the oven from an aircraft galley. The food is heated in a food preparation chamber of the oven using steam. The steam can be provided by supplying water to the oven and heating the water within the oven to evaporate it, or by injecting steam into the oven directly. Valves are used to control the water or steam supply to the chamber. Control of these valves is important, since a failure thereof can cause the oven to flood with hot water or steam, leading to possible injuries to flight attendants or passengers. WO2011/056763A1, DE102008012681A1 and ITTA20120005A1 disclose arrangements of the prior art. WO2004/104483A1 discloses an oven system powered by an on-board grid of an aircraft, for which a plug connection is formed at the rear of the oven.

The present disclosure aims to provide an improved steam oven.

### Summary

According to one aspect of the invention there is provided a steam oven for an aircraft galley according to claim 1.

The valve may be electrically connected to a first power supply to receive power therefrom and the sensor may be electrically connected to a second power supply to receive power therefrom, wherein the second power supply is electrically isolated from the first power supply.

In an optional example, the actuation of the valve by the control unit is not based on the valve state detection by the sensor.

In an optional example, the valve comprises a circuit board including the sensor, wherein the circuit board is arranged to receive and process sensor data from the sensor and output a signal indicative of the actual valve state based on the sensor data. In another optional example, the sensor is configured to transmit sensor data to a remote electronics unit for processing.

The valve may optionally be a normally-closed solenoid valve. The solenoid valve may comprise a solenoid and a plunger, wherein the solenoid, when powered, may move the plunger from an extended position in which the plunger extends into the pipeline to block the passage of fluid therethrough, to a retracted position in which the plunger is retracted from the pipeline to permit the passage of fluid therethrough. The sensor may be arranged to detect whether the plunger is in the extended position or the retracted position. The solenoid valve may optionally comprise a biasing member arranged to bias the plunger to the extended position when the solenoid is not powered. In an example, the biasing member is a spring.

In an optional example, the steam oven comprises a verification circuit configured to verify that the expected valve state corresponds to the actual state of the valve detected by the sensor. The expected valve state may be the expected state of the valve after receiving an actuation command from the control unit.

An aspect of the invention provides an aircraft galley insert comprising a steam oven as disclosed herein.

An aspect of the invention provides a method of operating a steam oven in an aircraft galley according to claim 10.

Optionally, the actuation of the valve by the control unit is not based on the valve state detection by the sensor.

In an optional example, the valve comprises a circuit board including the sensor. The method may comprise using the circuit board to receive and process sensor data from the sensor and generate a signal indicative of the actual valve state based on the sensor data.

In another optional example, the method comprises transmitting sensor data from the sensor to a remote electronics unit for sensor data processing.

The valve may optionally be a normally-closed solenoid valve. The method may comprise powering a solenoid of the solenoid valve and thereby causing a plunger of the solenoid valve to move from an extended position in which the plunger extends into the pipeline to block the passage of fluid therethrough, to a retracted position in which the plunger is retracted from the pipeline to permit the passage of fluid therethrough. The sensor may detect whether the plunger is in the extended position or the retracted position. The method may comprise biasing the plunger to the extended position using a spring when the solenoid is not powered.

The method may optionally comprise verifying that an expected valve state corresponds to the actual valve state detected by the sensor. The expected valve state may be the expected state of the valve after receiving an actuation command from the control unit.

An aspect of the present disclosure provides a method of operating a steam oven as disclosed herein.

### Brief description of drawings

Certain embodiments of the invention will now be described, by way of example only, and with reference to the accompanying drawings.
Figure 1 shows a schematic diagram of a steam oven according to an embodiment of the disclosure.
Figure 2 shows a schematic view of the valve of the steam oven of Figure 1, in which the valve is in a closed state.
Figure 3 shows a schematic view of the valve shown in Figure 2, in which the valve is in an open state.

### Detailed description

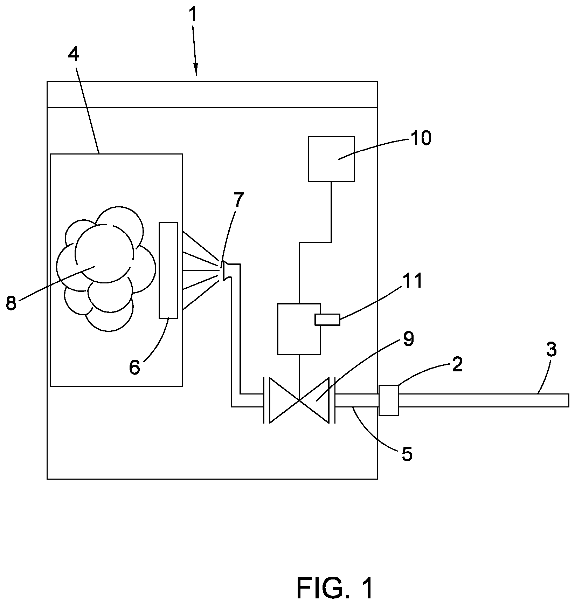

Figure 1 shows a schematic diagram of an example of an embodiment of the present disclosure. The Figure shows a steam oven 1 attached via a connector 2 to a water supply 3 external to the steam oven 1. The steam oven 1 may be part of a galley insert for an aircraft. The steam oven 1 comprises a food preparation chamber 4 for receiving food for heating or cooking, a pipeline 5 arranged to receive water from the water supply 3, and a heating element 6. The heating element 6 may be located inside or outside of the food preparation chamber 4. A first end of the pipeline 5 is connected to the connector 2. A second end of the pipeline 5 comprises a nozzle 7 for spraying water received from the water supply 3 onto the heating element 6 to create steam 8 for heating food in the food preparation chamber 4.

In some embodiments (not shown), the steam oven 1 may instead receive steam from an external supply, rather than water. Thus the steam oven 1 may not comprise the heating element 6 and the nozzle 7, and the pipeline 5 may be arranged to supply steam directly from the external supply to the food preparation chamber 4.

The pipeline 5 comprises a valve 9 configured to regulate the flow of water (or steam) through the pipeline 5. The valve 9 has an open state in which the valve 9 permits the flow of fluid through the pipeline 5, and a closed state in which the valve 9 prevents the flow of fluid through the pipeline 5. The pipeline 5 may further comprise additional valves 9 configured in this way. In this example, the valve 9 is a solenoid valve 9. However, other valve types may be used.

The solenoid valve 9 is electrically connected to a control unit 10. The control unit 10 is configured to actuate the valve 9 between the open and closed states. The control unit 10 can transmit a command signal to the valve 9 corresponding to a desired state of the valve 9. For example, an "open" command signal may be transmitted when it is desired for the valve 9 to be in an open state, and a "close" command signal may be transmitted when it is desired for the valve 9 to be in a closed state. If the valve 9 is operating correctly, then the valve 9 will be actuated according to the command signal. An expected valve state is the state in which the valve 9 is expected to be after receiving an actuation command from the control unit 10, assuming the valve and control unit are operating correctly.

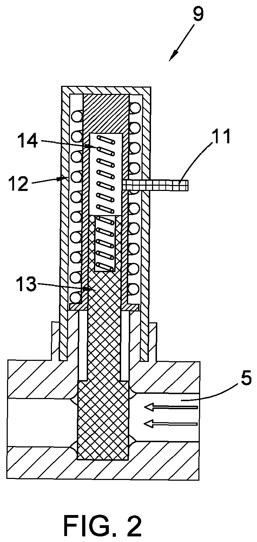

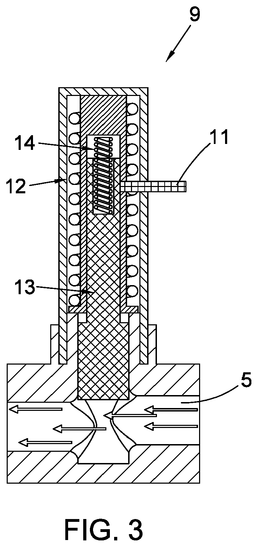

The valve 9 comprises a sensor 11 configured to detect an actual state of the valve 9. The actual valve state is the state which the valve 9 is actually in after receiving an actuation command from the control unit 10. The sensor 11 will be described in more detail later with reference to Figures 2 and 3.

The actual valve state may differ from the expected valve state if there is a fault in the system. For instance, a fault in the control unit 10 may cause an "open" command signal to be transmitted to the valve 9, when it was desired to close the valve 9. In another example, a fault in the valve 9 may cause the valve 9 to remain in an open or partially open state, even after receiving a "close" command signal from the control unit 10. In some embodiments, the sensor 11 can be used to verify whether the expected valve state corresponds to the actual valve state.

Figures 2 and 3 show a schematic view of the solenoid valve 9 of the steam oven 1 of Figure 1. Figure 2 shows the valve 9 in a closed state, and Figure 3 shows the valve 9 in an open state.

The solenoid valve 9 comprises a solenoid 12 and a plunger 13 which are arranged such that the solenoid 12, when powered, moves the plunger 13 from an extended position in which the plunger 13 extends into the pipeline 5 to block the passage of fluid therethrough, to a retracted position in which the plunger 13 is retracted from the pipeline 5 to permit the passage of fluid therethrough. Figure 2 shows the plunger 13 in the extended position, and Figure 3 shows the plunger 13 in the retracted position.

The solenoid 12 of the solenoid valve 9 is configured to receive power from the control unit 10 to energise the solenoid 12. The control unit 10 therefore actuates the valve 9 by selectively powering the solenoid 9. In this example, an "open" command signal transmitted by the control unit 10 to the valve 9 provides power to the solenoid 12 which causes the solenoid 12 to move the plunger 13 to the retracted position using electromagnetic forces, and a "closed" command signal transmitted by the control unit 10 to the valve 9 ceases power to the solenoid 12.

The solenoid valve comprises a spring 14 arranged to bias the plunger 13 to the extended position. Thus, when there is no power to the solenoid 12, the plunger 13 is urged into the extended position by the biasing action of the spring 14 (as shown in Figure 2). When there is power to the solenoid 12, the force exerted by the solenoid 12 on the plunger 13 overcomes the spring force and causes the spring 14 to compress (as shown in Figure 3). In some examples, a different biasing member may be provided.

The solenoid valve 9 is a normally-closed valve since the spring 14 biases the plunger 13 to the extended position. A normally-closed valve can provide safety benefits since the water or steam is normally prevented from reaching the food preparation chamber, thus decreasing the risk of flooding in the oven.

The sensor 11 is arranged to detect whether the plunger 13 is in the retracted position or the extended position. The sensor 11 may comprise any suitable sensor type. Examples include optical sensor, magnetic sensor, ultrasonic sensor, etc. The most suitable type of sensor may depend on the type of valve being used.

In one illustrative example, the sensor 11 comprises an optical sensor 11 arranged such that, when the plunger 13 is in the retracted position, the plunger 13 blocks a light path of the optical sensor 11, and when the plunger 13 is in the extended position, the plunger 13 does not block the light path of the optical sensor 11. Thus, the sensor data will indicate that the actual valve state is an open state when the data corresponds to the light path being blocked, and the sensor data will indicate that the actual valve state is a closed state when the data corresponds to the light path not being blocked. In other examples the optical sensor 11 may be arranged oppositely, such that the plunger 13 being in the retracted position does not block a light path of the optical sensor 11, and the plunger 13 being in the extended position blocks the light path of the optical sensor 11.

The sensor 11 and the valve 9 are configured such that the detection of the actual valve state by the sensor 11 is independent of control of the valve 9 by the control unit 10.

The actuation of the valve 9 by the control unit 10 is not based on the valve state detection by the sensor 11. That is, the command signal transmitted by the control unit 10 to the valve 9 is independent of (e.g. is not based on and/or does not depend on) measurements by the sensor 11. In some embodiments, the control unit 10 and/or the valve 9 may be electrically isolated from the sensor 11. This is beneficial since the circuitry for controlling the valve actuation is then not a possible common cause of failure of the valve 9 and the sensor 11.

In some embodiments the sensor 11 directly detects the physical location of the plunger 13, rather than inferring the plunger location e.g. by monitoring the current in the solenoid 12. This is because if the valve and the sensor are dependent on the same current, then in the case of a failure the sensor 11 would not be able to independently verify the valve state. In addition, such sensors can be costly and complex.

The valve 9 and the sensor 11 are configured to receive power from separate and independent (e.g. electrically isolated) power supplies (not shown). In examples in which the valve 9 receives power from the control unit 10, e.g. in the form of command signals, the control unit 10 may be configured to receive power from a first power supply that is independent of a second power supply providing power to the sensor 11. This can be advantageous since a failure of the first power supply would not affect operation of the sensor 11, and a failure of the second power supply would not affect operation of the valve 9, so that the power supply is not a possible common cause of failure of the valve 9 and the sensor 11. The steam oven 1 may comprise the two power supplies for separately powering the valve 9 (and/or control unit 10) and the sensor 11.

The sensor 11 outputs sensor data about the actual valve state for processing. In some embodiments, the sensor 11 outputs the sensor data to a circuit board (not shown) located on or proximate to the valve 9. The circuit board may comprise the sensor 11, and may be arranged to receive and process the sensor data from the sensor 11 and output a signal indicative of the actual valve state based on the sensor data. In other embodiments, the sensor 11 is configured to transmit the sensor data to an electronics unit (not shown) which is located remotely from the valve 9. The transmission may be wired or wireless, for instance. The remote electronics unit may process the sensor data and output a signal indicative of the actual valve state based on the sensor data.

The state of the valve 9 can be verified by comparing the actual valve state as measured by the sensor 11 to the expected valve state as expected based on the command signal from the control unit 10. The steam oven 1 may comprise a verification circuit (not shown) configured to perform this comparison. The verification circuit may be configured to receive the signal indicative of the actual valve state based on the sensor data (e.g. from the circuit board or the remote electronics unit) and to receive a signal indicative of the expected valve state (e.g. from the control unit 10), and to compare or cross-check the signals. It can then be verified whether the expected valve state corresponds to the actual valve state. If there is a discrepancy, this may indicate a fault with the valve 9 or the control unit 10. The verification circuit may be part of the control circuitry for general operation of the steam oven 1.

As mentioned previously, although only one valve 9 is shown in the Figures, the steam oven 1 may comprise further valves 9 configured in the same way on pipeline 5. In an example, two solenoid valves 9 are provided. The multiple valves 9 may share a common control unit 10 or they may each receive actuation signals from separate control units 10. The multiple valves 9 may each have their own sensor 11 for detecting the actual state of the respective valve 9. This advantageously provides redundancy in case of a valve failure.

## Claims

1. A steam oven for an aircraft galley, comprising:
a pipeline (5) for supplying fluid comprising water or steam to a food preparation chamber (4) of the steam oven, the pipeline (5) being configured to receive water or steam from a source external to the steam oven;
a valve (9) configured to regulate the flow of said fluid through the pipeline (5), the valve (9) having an open state in which the valve (9) permits the flow of said fluid through the pipeline (5) and a closed state in which the valve (9) prevents the flow of said fluid through the pipeline (5); and
a control unit (10) configured to actuate the valve (9) between the open and closed states;
**characterised in that**:
the valve (9) comprises a sensor (11) configured to detect an actual state of the valve (9), the sensor (11) being independent of the control unit (10);
wherein the valve (9) and the sensor (11) are configured to receive power from separate and independent power supplies.

2. A steam oven as claimed in claim 1, wherein the actuation of the valve (9) by the control unit (10) is not based on the valve (9) state detection by the sensor (11).

3. A steam oven as claimed in claim 1 or 2, wherein the valve (9) comprises a circuit board including the sensor (11), the circuit board being arranged to receive and process sensor (11) data from the sensor (11) and output a signal indicative of the actual valve (9) state based on the sensor (11) data.

4. A steam oven as claimed in claim 1 or 2, wherein the sensor (11) is configured to transmit sensor (11) data to a remote electronics unit for processing.

5. A steam oven as claimed in any preceding claim, wherein the valve (9) is a normally-closed solenoid valve (9).

6. A steam oven as claimed in claim 5, wherein the solenoid valve (9) comprises a solenoid (12) and a plunger (13), wherein the solenoid (12), when powered, moves the plunger (13) from an extended position in which the plunger (13) extends into the pipeline (5) to block the passage of fluid therethrough, to a retracted position in which the plunger (13) is retracted from the pipeline (5) to permit the passage of fluid therethrough.

7. A steam oven as claimed in claim 6, wherein the sensor (11) is arranged to detect whether the plunger (13) is in the extended position or the retracted position.

8. A steam oven as claimed in claim 6 or 7, wherein the solenoid valve (9) comprises a spring (14) arranged to bias the plunger (13) to the extended position when the solenoid (12) is not powered.

9. A steam oven as claimed in any preceding claim, comprising a verification circuit configured to verify that an expected valve (9) state corresponds to the actual state of the valve (9) detected by the sensor (11), the expected valve (9) state being the expected state of the valve (9) after receiving an actuation command from the control unit (10).

10. A method of operating a steam oven (1) in an aircraft galley, comprising:
flowing fluid comprising water or steam through a pipeline (5) towards a food preparation chamber (4) of the steam oven (1);
using a control unit (10), actuating a valve (9) to regulate the flow of said fluid through the pipeline (5), the valve (9) having an open state in which the valve (9) permits the flow of fluid through the pipeline (5) and a closed state in which the valve (9) prevents the flow of fluid through the pipeline (5); and, **characterised by**
detecting an actual state of the valve (9) using a sensor (11) on the valve (9), the sensor (11) being independent of the control unit (10); and
powering the valve (9) and the sensor (11) using separate and independent power supplies.

11. A method as claimed in claim 10, wherein the actuation of the valve (9) by the control unit (10) is not based on the valve (9) state detection by the sensor (11).

12. A method as claimed in claim 10 or 11, wherein (A) the valve (9) comprises a circuit board including the sensor (11), and wherein the method comprises using the circuit board to receive and process sensor (11) data from the sensor (11) and generate a signal indicative of the actual valve (9) state based on the sensor (11) data, or (B) comprising transmitting sensor (11) data from the sensor (11) to a remote electronics unit for sensor (11) data processing.

13. A method as claimed in any of claims 10 to 12, wherein the valve (9) is a normally-closed solenoid valve (9).

14. A method as claimed in claim 13, comprising powering a solenoid (12) of the solenoid valve (9) and thereby causing a plunger (13) of the solenoid valve (9) to move from an extended position in which the plunger (13) extends into the pipeline (5) to block the passage of fluid therethrough, to a retracted position in which the plunger (13) is retracted from the pipeline (5) to permit the passage of fluid therethrough, and optionally wherein the sensor (11) detects whether the plunger (13) is in the extended position or the retracted position.

15. A method as claimed in claim 14, comprising biasing the plunger (13) to the extended position using a spring (14) when the solenoid (12) is not powered.

## Patentansprüche

1. Ofen für eine Luftfahrzeugbordküche, der Folgendes umfasst:
eine Rohrleitung (5) zum Zuführen von Fluid, das Wasser oder Dampf umfasst, zu einer Lebensmittelzubereitungskammer (4) des Dampfofens, wobei die Rohrleitung (5) dazu konfiguriert ist, Wasser oder Dampf von einer Quelle außerhalb des Dampfofens zu empfangen;
ein Ventil (9), das dazu konfiguriert ist, den Fluss des Fluids durch die Rohrleitung (5) zu regulieren, wobei das Ventil (9) einen offenen Zustand aufweist, in dem das Ventil (9) den Fluss des Fluids durch die Rohrleitung (5) zulässt, und einen geschlossenen Zustand, in dem das Ventil (9) den Fluss des Fluids durch die Rohrleitung (5) verhindert; und
eine Steuereinheit (10), die dazu konfiguriert ist, das Ventil (9) zwischen dem offenen und dem geschlossenen Zustand zu betätigen;
**dadurch gekennzeichnet, dass**:
das Ventil (9) einen Sensor (11) umfasst, der dazu konfiguriert ist, einen tatsächlichen Zustand des Ventils (9) zu erfassen, wobei der Sensor (11) von der Steuereinheit (10) unabhängig ist; wobei das Ventil (9) und der Sensor (11) dazu konfiguriert sind, Strom aus separaten und unabhängigen Stromversorgungen zu empfangen.

2. Dampfofen nach Anspruch 1, wobei die Betätigung des Ventils (9) durch die Steuereinheit (10) nicht auf der Zustandserfassung des Ventils (9) durch den Sensor (11) basiert.

3. Dampfofen nach Anspruch 1 oder 2, wobei das Ventil (9) eine Leiterplatte, die den Sensor (11) beinhaltet, umfasst, wobei die Leiterplatte dazu eingerichtet ist, Daten des Sensors (11) zu empfangen und zu verarbeiten und basierend auf den Daten des Sensors (11) ein Signal auszugeben, das den tatsächlichen Zustand des Ventils (9) angibt.

4. Dampfofen nach Anspruch 1 oder 2, wobei der Sensor (11) dazu konfiguriert ist, Daten des Sensors (11) zum Verarbeiten an eine entfernte elektronische Einheit zu übertragen.

5. Dampfofen nach einem der vorstehenden Ansprüche, wobei das Ventil (9) ein normalerweise geschlossenes Magnetventil (9) ist.

6. Dampfofen nach Anspruch 5, wobei das Magnetventil (9) einen Magneten (12) und einen Kolben (13) umfasst, wobei der Magnet (12) bei Stromversorgung den Kolben (13) aus einer ausgefahrenen Position, in der sich der Kolben (13) in die Rohrleitung (5) erstreckt, um den Durchgang von Fluid dahindurch zu blockieren, in eine eingefahrene Position bewegt, in der der Kolben (13) aus der Rohrleitung (5) zurückgezogen ist, um den Durchgang von Fluid dahindurch zu ermöglichen.

7. Dampfofen nach Anspruch 6, wobei der Sensor (11) dazu eingerichtet ist zu erfassen, ob sich der Kolben (13) in der ausgefahrenen oder der eingefahrenen Position befindet.

8. Dampfofen nach Anspruch 6 oder 7, wobei das Magnetventil (9) eine Feder (14) umfasst, die dazu eingerichtet ist, den Kolben (13) in die ausgefahrene Position vorzuspannen, wenn der Magnet (12) nicht mit Strom versorgt ist.

9. Dampfofen nach einem der vorstehenden Ansprüche, der eine Prüfschaltung umfasst, die dazu konfiguriert ist zu prüfen, ob ein erwarteter Zustand des Ventils (9) dem tatsächlichen Zustand des Ventils (9) entspricht, der von dem Sensor (11) erfasst wird, wobei der erwartete Zustand des Ventils (9) der erwartete Zustand des Ventils (9) nach dem Empfangen eines Betätigungsbefehls von der Steuereinheit (10) ist.

10. Verfahren zum Betreiben eines Dampfofens (1) in einer Flugzeugküche, das Folgendes umfasst:
Fließen von Fluid, das Wasser oder Dampf umfasst, durch eine Rohrleitung (5) zu einer Lebensmittelzubereitungskammer (4) des Dampfofens (1);
ein Ventil (9), das dazu konfiguriert ist, den Fluss des Fluids durch die Rohrleitung (5) zu regulieren, wobei das Ventil (9) einen offenen Zustand aufweist, in dem das Ventil (9) den Fluss des Fluids durch die Rohrleitung (5) zulässt, und einen geschlossenen Zustand, in dem das Ventil (9) den Fluss des Fluids durch die Rohrleitung (5) verhindert; und **gekennzeichnet durch** Erfassen eines Ist-Zustands des Ventils (9) mittels eines Sensors (11) an dem Ventil (9), wobei der Sensor (11) von der Steuereinheit (10) unabhängig ist; und
und Versorgen des Ventils (9) und des Sensors (11) unter Verwenden getrennter und unabhängiger Stromversorgungen.

11. Verfahren nach Anspruch 10, wobei die Betätigung des Ventils (9) durch die Steuereinheit (10) nicht auf der Zustandserfassung des Ventils (9) durch den Sensor (11) basiert.

12. Verfahren nach Anspruch 10 oder 11, wobei (A) das Ventil (9) eine Leiterplatte, die den Sensor (11) beinhaltet, umfasst, und wobei das Verfahren die Verwendung der Leiterplatte zum Empfangen und Verarbeiten von Daten des Sensors (11) von dem Sensor (11) und zum Erzeugen eines Signals umfasst, das den tatsächlichen Zustand des Ventils (9) basierend auf den Daten des Sensors (11) angibt, oder (B) das Übertragen von Daten des Sensors (11) von dem Sensor (11) an eine entfernte elektronische Einheit zum Verarbeiten der Daten des Sensors (11) umfasst.

13. Verfahren nach einem der Ansprüche 10 bis 12, wobei das Ventil (9) ein normalerweise geschlossenes Magnetventil (9) ist.

14. Verfahren nach Anspruch 13, das das Versorgen eines Solenoids (12) des Solenoidventils (9) mit Energie und dadurch veranlasst, dass sich ein Kolben (13) des Solenoidventils (9) aus einer ausgefahrenen Position, in der der Kolben (13) in die Rohrleitung (5) hineinragt, um den Durchgang von Fluid durch diese zu blockieren, in eine eingefahrene Position bewegt, in der der Kolben (13) aus der Rohrleitung (5) zurückgezogen ist, um den Durchgang von Fluid durch diese zu ermöglichen, und wobei optional der Sensor (11) erfasst, ob sich der Kolben (13) in der ausgefahrenen oder der eingefahrenen Position befindet.

15. Verfahren nach Anspruch 14, das das Vorspannen des Kolbens (13) in die ausgefahrene Position umfasst, wenn der Elektromagnet (12) nicht mit Strom versorgt wird.

## Revendications

1. Four à vapeur pour cuisine d'aéronef, comprenant :
une canalisation (5) permettant de fournir un fluide comprenant de l'eau ou de la vapeur à une chambre de préparation d'aliments (4) du four à vapeur, la canalisation (5) étant configurée pour recevoir de l'eau ou de la vapeur provenant d'une source extérieure au four à vapeur ;
une vanne (9) configurée pour réguler le débit dudit fluide à travers la canalisation (5), la vanne (9) ayant un état ouvert dans lequel la vanne (9) permet l'écoulement dudit fluide à travers la canalisation (5) et un état fermé dans lequel la vanne (9) empêche l'écoulement dudit fluide à travers la canalisation (5) ; et
une unité de commande (10) configurée pour actionner la vanne (9) entre les états ouvert et fermé ;
**caractérisé en ce que** :
la vanne (9) comprend un capteur (11) configuré pour détecter un état réel de la vanne (9), le capteur (11) étant indépendant de l'unité de commande (10) ;
dans lequel la vanne (9) et le capteur (11) sont configurés pour recevoir de l'énergie provenant d'alimentations en énergie séparées et indépendantes.

2. Four à vapeur selon la revendication 1, dans lequel l'actionnement de la vanne (9) par l'unité de commande (10) n'est pas basé sur la détection de l'état de la vanne (9) par le capteur (11).

3. Four à vapeur selon la revendication 1 ou 2, dans lequel la vanne (9) comprend une carte de circuit imprimé comprenant le capteur (11), la carte de circuit imprimé étant conçue pour recevoir et traiter les données du capteur (11) provenant du capteur (11) et émettre un signal indicatif de l'état réel de la vanne (9) sur la base des données du capteur (11).

4. Four à vapeur selon la revendication 1 ou 2, dans lequel le capteur (11) est configuré pour transmettre des données du capteur (11) à une unité électronique distante à des fins de traitement.

5. Four à vapeur selon une quelconque revendication précédente, dans lequel la vanne (9) est une électrovanne normalement fermée (9).

6. Four à vapeur selon la revendication 5, dans lequel l'électrovanne (9) comprend un solénoïde (12) et un piston (13), le solénoïde (12), lorsqu'il est alimenté, déplaçant le piston (13) d'une position étendue dans laquelle le piston (13) s'étend dans la canalisation (5) pour bloquer le passage du fluide à travers celle-ci, à une position rétractée dans laquelle le piston (13) est rétracté de la canalisation (5) pour permettre le passage du fluide à travers celle-ci.

7. Four à vapeur selon la revendication 6, dans lequel le capteur (11) est agencé pour détecter si le piston (13) est en position étendue ou en position rétractée.

8. Four à vapeur selon la revendication 6 ou 7, dans lequel l'électrovanne (9) comprend un ressort (14) agencé pour solliciter le piston (13) vers la position étendue lorsque le solénoïde (12) n'est pas alimenté.

9. Four à vapeur selon une quelconque revendication précédente, comprenant un circuit de vérification configuré pour vérifier qu'un état attendu de la vanne (9) correspond à l'état réel de la vanne (9) détecté par le capteur (11), l'état attendu de la vanne (9) étant l'état attendu de la vanne (9) après réception d'une instruction d'actionnement de l'unité de commande (10).

10. Procédé de fonctionnement d'un four à vapeur (1) dans une cuisine d'aéronef, comprenant :
l'écoulement d'un fluide comprenant de l'eau ou de la vapeur à travers une canalisation (5) vers une chambre de préparation d'aliments (4) du four à vapeur (1) ;
au moyen d'une unité de commande (10), l'actionnement d'une vanne (9) pour réguler le débit dudit fluide à travers la canalisation (5), la vanne (9) ayant un état ouvert dans lequel la vanne (9) permet l'écoulement du fluide à travers la canalisation (5) et un état fermé dans lequel la vanne (9) empêche l'écoulement du fluide à travers la canalisation (5) ;
et **caractérisé par**
la détection d'un état réel de la vanne (9) à l'aide d'un capteur (11) sur la vanne (9), le capteur (11) étant indépendant de l'unité de commande (10) ; et
l'alimentation de la vanne (9) et du capteur (11) à l'aide d'alimentations en énergie séparées et indépendantes.

11. Procédé selon la revendication 10, dans lequel l'actionnement de la vanne (9) par l'unité de commande (10) n'est pas basé sur la détection de l'état de la vanne (9) par le capteur (11).

12. Procédé selon la revendication 10 ou 11, dans lequel (A) la vanne (9) comprend une carte de circuit imprimé incluant le capteur (11), et dans lequel le procédé comprend l'utilisation de la carte de circuit imprimé pour recevoir et traiter les données du capteur (11) provenant du capteur (11) et générer un signal indicatif de l'état réel de la vanne (9) sur la base des données du capteur (11), ou (B) comprenant la transmission des données du capteur (11) du capteur (11) à une unité électronique distante à des fins de traitement des données du capteur (11).

13. Procédé selon l'une quelconque des revendications 10 à 12, dans lequel la vanne (9) est une électrovanne normalement fermée (9) .

14. Procédé selon la revendication 13, comprenant l'alimentation d'un solénoïde (12) de l'électrovanne (9), provoquant ainsi le déplacement d'un piston (13) de l'électrovanne (9) d'une position étendue dans laquelle le piston (13) s'étend dans la canalisation (5) pour bloquer le passage du fluide à travers celle-ci, vers une position rétractée dans laquelle le piston (13) est rétracté de la canalisation (5) pour permettre le passage du fluide à travers celle-ci, et éventuellement dans lequel le capteur (11) détecte si le piston (13) est dans la position étendue ou la position rétractée.

15. Procédé selon la revendication 14, comprenant la sollicitation du piston (13) vers la position étendue à l'aide d'un ressort (14) lorsque le solénoïde (12) n'est pas alimenté.
